# EUROPEAN PATENT APPLICATION

(11) **EP 4 753 061 A1**
(43) Date of publication of application: **03.06.2026**
(21) Application number: 24844223.8
(22) Date of filing: 27.02.2024
(51) Int. Cl.: H01M 50/503, H01M 50/569, H01M 50/249, H01M 50/244

(54) **ELECTRICAL CONNECTION STRUCTURE, CONNECTION ASSEMBLY, BATTERY PACK AND AUTOMOBILE**

(30) Priority: 26.07.2023 CN 202321995173 U; 26.07.2023 CN 202321995997 U
(71) Applicant: BYD Company Limited, Shenzhen, Guangdong 518118 (CN)
(72) Inventor: HE, Miaoling, Shenzhen, Guangdong 518118 (CN); ZHANG, Yaosheng, Shenzhen, Guangdong 518118 (CN); ZHU, Liequn, Shenzhen, Guangdong 518118 (CN); HU, Shichao, Shenzhen, Guangdong 518118 (CN); LAI, Qing, Shenzhen, Guangdong 518118 (CN)
(74) Representative: Mathys & Squire
(86) International application number: PCT/CN2024/078830
(87) International publication number: WO 2025/020525

(57) **Abstract**

An electrical connection structure, a connection assembly (1000), a battery pack, and an automobile. The electrical connection structure comprises: a first connecting member (200) a second connecting member (300), and an adapter (400); the first connecting member (200) is provided with a first positioning hole (201), and the second connecting member (300) is provided with a second positioning hole (301); the adapter (400) is provided with a first boss (401) and a second boss (402),the first boss (401) corresponding to the first positioning hole (201) in shape, and the second boss (402) corresponding to the second positioning hole (301) in shape.

## Description

### CROSS-REFERENCE TO RELATED APPLICATIONS

This application claims priorities to Chinese Patent Application No. 202321995997.X, filed on July 26, 2023 and entitled "CONNECTION ASSEMBLY, BATTERY PACK, AND ELECTRIC DEVICE", and to Chinese Patent Application No. 202321995173.2, filed on July 26, 2023 and entitled "ELECTRICAL CONNECTION STRUCTURE, BATTERY PACK, AND VEHICLE", both of which are incorporated herein by reference in their entireties.

### TECHNICAL FIELD

This application relates to the field of new energy technologies, and in particular, to an electrical connection structure, a connection assembly, a battery pack, and a vehicle.

### BACKGROUND

In conventional technologies, when a pair of electrical parts need to be connected, each electrical part needs to connect to one connection member, and then two connection members lap over each other. When a plurality of pairs of electrical parts need to be connected, double the number of connection members are required, resulting in an excessive number of parts and components and a complex connection structure.

### SUMMARY

This application is intended to resolve at least one of the technical problems existing in conventional technologies. Therefore, an object of this application is to provide an electrical connection structure with a small number of parts and components and a simple structure.

This application further provides a connection assembly having the foregoing electrical connection structure.

This application further provides a battery pack having the foregoing electrical connection structure or connection assembly.

This application further provides a vehicle having the foregoing electrical connection structure, connection assembly, or battery pack.

The electrical connection structure according to this application includes: a first connection member, wherein the first connection member is provided with a first positioning hole; a second connection member, wherein the second connection member is provided with a second positioning hole; and an adapter member, wherein the adapter member is provided with a first boss and a second boss, a shape of the first boss corresponds to a shape of the first positioning hole, and a shape of the second boss corresponds to a shape of the second positioning hole. The electrical connection structure according to this application effectively reduces the number of parts and components and connection complexity.

The connection assembly according to this application is configured to be connected between a sampling harness and a cell, and includes: an electrical connection structure, wherein the electrical connection structure is constructed as the foregoing electrical connection structure, the adapter member is configured to electrically connect to the cell, and a connection portion is disposed on the adapter member; and an electrical connection member, configured to connect the connection portion and the sampling harness, wherein a holding portion is disposed at an end of the electrical connection member that is connected to the connection portion, and the holding portion is configured to maintain a relative position between the electrical connection member and the connection portion.

The connection assembly according to this application facilitates deployment of a subsequent welding process between a conductive member and the connection member, thereby improving mounting efficiency.

The battery pack according to this application includes the foregoing electrical connection structure or connection assembly. It will be understood that, because the battery pack according to this application uses the foregoing electrical connection structure or connection assembly, a mounting process may also be simplified, and the mounting efficiency may be improved.

The vehicle according to this application includes the foregoing electrical connection structure, connection assembly, or battery pack. It will be understood that, because an electric device according to this application uses the foregoing electrical connection structure, connection assembly, or battery pack, the mounting process may also be simplified, and the mounting efficiency may be improved.

Additional aspects and advantages of this application are given in part in the following descriptions, and become apparent in part from the following descriptions or are understood from the practice of this application.

### BRIEF DESCRIPTION OF DRAWINGS

FIG. 1 is a three-dimensional diagram of a first connection member according to an embodiment of this application;
FIG. 2 is a front view of a first connection member according to an embodiment of this application;
FIG. 3 is a bottom view of a first connection member according to an embodiment of this application;
FIG. 4 is a three-dimensional diagram of a second connection member according to an embodiment of this application;
FIG. 5 is a rear view of a second connection member according to an embodiment of this application;
FIG. 6 is a bottom view of a second connection member according to an embodiment of this application;
FIG. 7 is a three-dimensional diagram of an adapter member according to an embodiment of this application;
FIG. 8 is an exploded view of an electrical connection structure according to an embodiment of this application;
FIG. 9 is an exploded view of a battery pack according to an embodiment of this application;
FIG. 10 is a three-dimensional diagram of a sampling bus according to an embodiment of this application;
FIG. 11 is a three-dimensional diagram of a low-voltage harness groove according to an embodiment of this application;
FIG. 12 is a partially enlarged view of a battery pack according to an embodiment of this application, and mainly shows an electrical connection structure;
FIG. 13 is a partially enlarged view of a battery pack at another position according to an embodiment of this application;
FIG. 14 is a schematic plan view of a structure of a battery pack according to an embodiment of this application;
FIG. 15 is a schematic plan view of a partial structure at a position A in FIG. 14;
FIG. 16 is a schematic plan view of a structure of a connection assembly according to an embodiment of this application;
FIG. 17 is a schematic plan view of a structure of a connection assembly according to another embodiment of this application;
FIG. 18 is a schematic plan view of a structure of an adapter member according to an embodiment of this application;
FIG. 19 is a schematic plan view of a structure of an electrical connection member according to an embodiment of this application;
FIG. 20 is a schematic plan view of a structure of a connection assembly according to another embodiment of this application;
FIG. 21 is a schematic plan view of a structure of an adapter member according to another embodiment of this application;
FIG. 22 is a schematic plan view of a structure of an adapter member according to another embodiment of this application; and
FIG. 23 is a schematic plan view of a structure of an electrical connection member according to another embodiment of this application.

### Reference numerals:

100: battery pack; 101: transverse side beam; 102: longitudinal side beam; 103: battery accommodation space; 104: tray longitudinal beam; 105: accommodation groove; 106: high-voltage busbar; 107: high-voltage busbar groove; 108: low-voltage harness; 1081: sampling line; 1082: sampling member; 1083: quick-connect insertion member; 109: low-voltage harness groove; 1091: opening; 110: tray transverse beam; 111: front power distribution box; 112: rear power distribution box; 113: battery module; 1131: sampling adapter harness plug;
500: battery pack; 501: tray; 5011: bottom plate; 5012: side wall; 502: cell; 5021: electrode core; 5022: housing; 5023: terminal pole; 503: sampling unit; 5031: sampling harness; 5032: receiver; 504: battery module;
1000: connection assembly;
30: electrical connection portion;
200: first connection member; 201: first positioning hole; 202: first positioning portion; 203: first transition portion; 204: first bent portion; 205: first wiring portion; 206: first edge;
300: second connection member; 301: second positioning hole; 302: second positioning portion; 303: second transition portion; 304: second bent portion; 305: second wiring portion; 306: second edge;
400: adapter member; 11: connection portion; 111: second connection surface; 12: protrusion; 121: top surface; 122: outer surface; 13: groove; 131: bottom surface; 132: inner surface; 14: bump; 15: clamping groove; 16: chamfer; 17: positioning post; 18: convex post; 401: first boss; 402: second boss;
20: electrical connection member; 21: connection piece; 22: holding portion; 22a: first holding portion; 22b: second holding portion; 221: first connection surface; 222: hollow region; 223: boss; 23: pre-bent section; 24: wiring hole; 25: positioning portion; 251: positioning hole.

### DESCRIPTION OF EMBODIMENTS

The following describes in detail embodiments of this application, examples of which are shown in accompanying drawings. The same or similar reference numerals represent the same or similar elements or elements having the same or similar functions throughout. Embodiments described below with reference to the accompanying drawings are examples and are merely used to explain this application, and shall not be construed as a limitation on this application.

In the following descriptions, a "longitudinal" direction indicates a length direction of a vehicle, and a "horizontal" direction indicates a width direction of the vehicle.

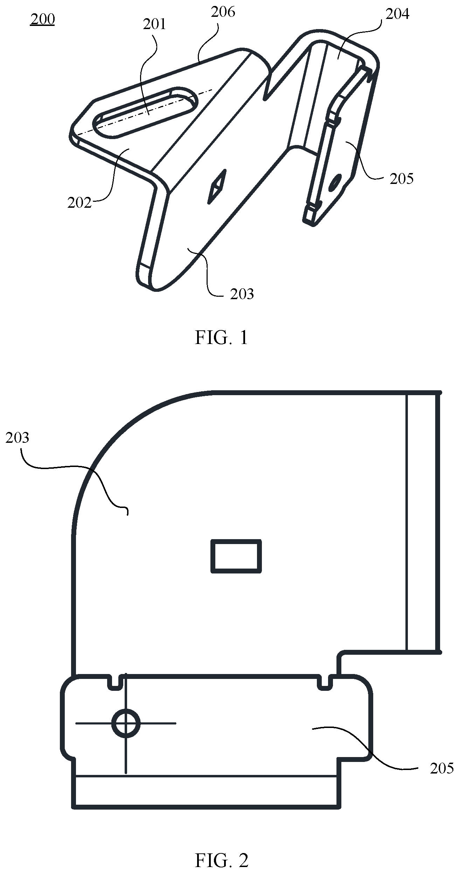

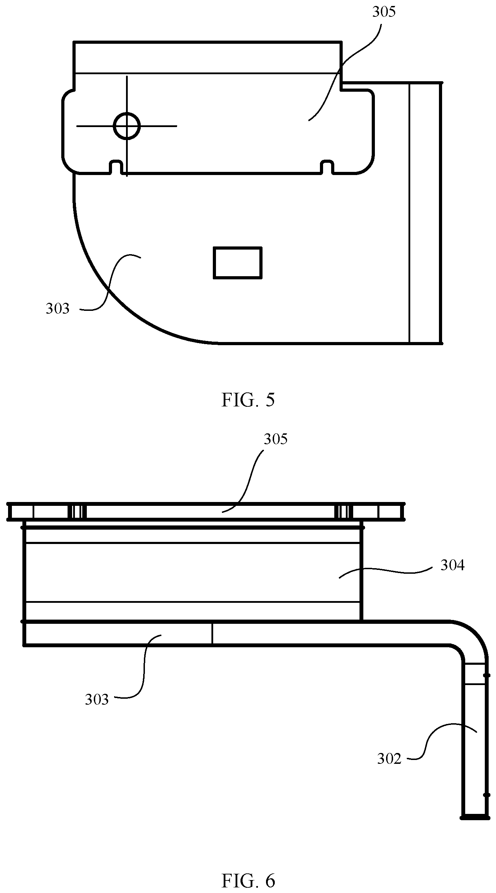

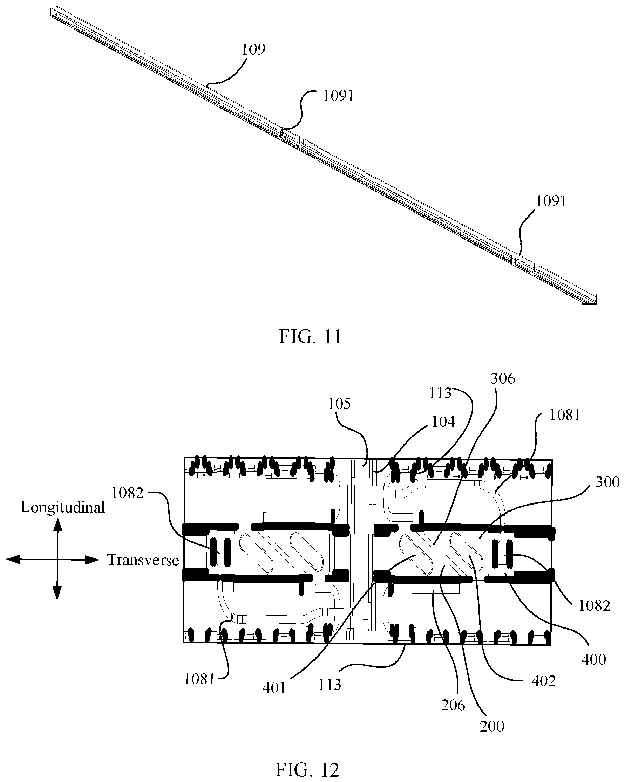

Referring to FIG. 1 to FIG. 8, and FIG. 11, an electrical connection structure in this embodiment includes a first connection member 200, a second connection member 300, and an adapter member 400. The first connection member 200 is provided with a first positioning hole 201, the second connection member 300 is provided with a second positioning hole 301, and the adapter member 400 is provided with a first boss 401 and a second boss 402. A shape of the first boss 401 corresponds to a shape of the first positioning hole 201, and a shape of the second boss 402 corresponds to a shape of the second positioning hole 301. In other words, if the shape of the first boss 401 is circular, the shape of the first positioning hole 201 is also circular. If the shape of the first boss 401 is triangular, the shape of the first positioning hole 201 is also triangular. A form of correspondence between the second boss 402 and the second positioning hole 301 is similar to that described above. It will be more clearly understood from FIG. 11 that, when an electrical connection is required, the first boss 401 is inserted into the first positioning hole 201, and the second boss 402 is inserted into the second positioning hole 301. In this way, positions of the first connection member 200 and the second connection member 300 are fixed. In such an electrical connection structure, if a connection point needs to be added, it is required to only increase a number of bosses on the adapter member 400 and correspondingly increase a number of connection members. There is no need to connect each two connection members through a pair of connection members, thereby reducing the number of parts. When a first electrical part and a second electrical part need to be connected to the third electrical part, only three connection members are required, that is, the first connection member, the second connection member, and the adapter member. There is no need to dispose a pair of connection members between the first electrical part and the third electrical part and dispose a pair of connection members between the second electrical part and the third electrical part, that is, there is no need to dispose four connection members in total, thereby effectively reducing the number of parts and components and reducing connection complexity. This beneficial effect is further described in detail below with reference to specific examples.

In some embodiments, the first connection member 200 and the second connection member 300 are constructed as electrical connection portions 30.

In some embodiments, the first boss 401 and the second boss 402 are constructed as convex posts 18.

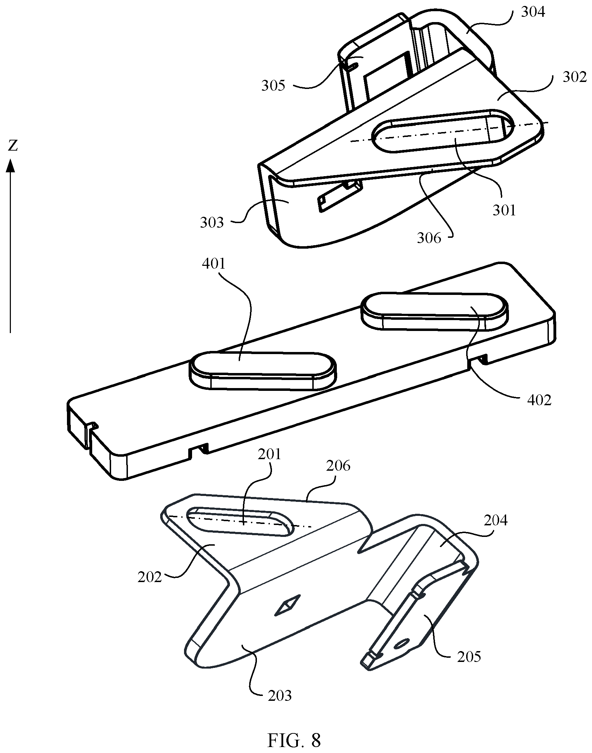

Referring to FIG. 8 and FIG. 12, in a state in which the first connection member 200 and the second connection member 300 are connected to the adapter member 400, the first connection member 200 and the second connection member 300 do not overlap in a Z direction. An advantage of such a structure lies in that, in a subsequent welding process, two connection members do not block each other due to overlapping, and that if there is a welding defect between the first connection member 200 and the adapter member 400, or there is a welding defect between the second connection member 300 and the adapter member 400, the welding defect can be found in a timely manner.

It will be understood from FIG. 1 to FIG. 3 that the first connection member 200 includes a first positioning portion 202, the first positioning portion is provided with the first positioning hole 201, the first positioning hole 201 is an oblong hole, and correspondingly, the first boss 401 is an oblong boss. An oblong shape makes it easy to observe an assembly direction, thereby achieving a foolproof design.

It will be understood from FIG. 2 to FIG. 6 that the second connection member 300 includes a second positioning portion 302, the second positioning portion 302 is provided with the second positioning hole 301, the second positioning hole 301 is an oblong hole, and correspondingly, the second boss 402 is an oblong boss. The oblong shape makes it easy to observe the assembly direction, thereby achieving the foolproof design.

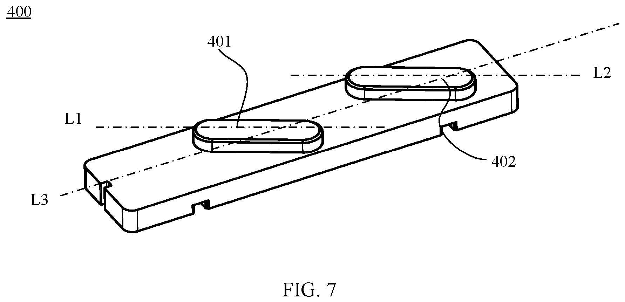

Referring to FIG. 7, a long axis L1 of the first boss 401 is disposed at an angle to a long axis L3 of the adapter member 400. In other words, L1 is neither parallel to nor coincides with L3. In this way, an installer can easily observe an assembly angle during assembly of the first connection member 200, thereby achieving the foolproof design. Similarly, a long axis L2 of the second boss 402 can also be disposed at an angle to the long axis L3 of the adapter member 400. In this way, an installer also easily observes an assembly angle during assembly of the second connection member 300, thereby achieving the foolproof design.

Referring to FIG. 8 and FIG. 12, in the state in which the first connection member 200 and the second connection member 300 are connected to the adapter member 400, a sum of areas of the first positioning portion 202 and the second positioning portion 302 is less than an area of the adapter member 400. In other words, on a plane on which the first boss 401 and the second boss 402 are located, the first positioning portion 202 and the second positioning portion 302 do not completely cover the adapter member 400, and a part of the adapter member 400 needs to be exposed, to help observe connection reliability between the first connection member 200 and the second connection member 300, and the adapter member 400. In addition, a clearance space can also be provided for connection between the adapter member 400 and another part, for example, a sampling member 1082.

Referring to FIG. 1 to FIG. 3, the first connection member 200 further includes a first transition portion 203. The first transition portion 203 is disposed at an angle to the first positioning portion 202. In other words, the first transition portion 203 is neither parallel to nor coincide with the first positioning portion 202.

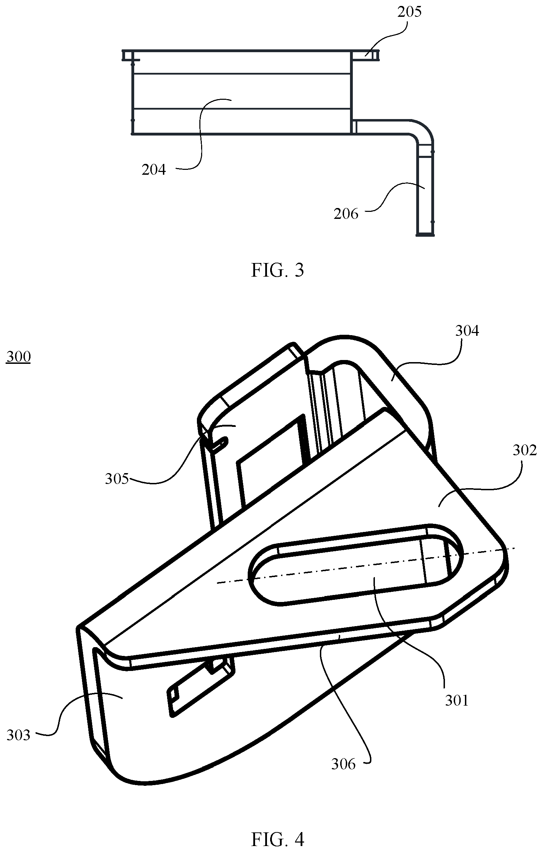

Referring to FIG. 4 to FIG. 6, the second connection member 300 further includes a second transition portion 303. The second transition portion 303 is disposed at an angle to the second positioning portion 302. In other words, the second transition portion 303 is neither parallel to nor coincide with the second positioning portion 302.

Referring to FIG. 8, in the state in which the first connection member 200 and the second connection member 300 are connected to the adapter member 400, the first transition portion 203 and the second transition portion 303 are respectively located on two sides of the adapter member 400. After the first boss 401 is inserted into the first positioning hole 201 and the second boss 402 is inserted into the second positioning hole 301, the first transition portion 203 and the second transition portion 303 are respectively located on the two sides of the adapter member 400. In this way, the first transition portion 203 and the second transition portion 303 can assist positioning of the first connection member 200 and the second connection member 300 respectively. In addition, the first connection member 200, the second connection member 300, and the adapter member 400 can be attached at appropriate positions by squeezing two transition portions by a peripheral part and component, to avoid subsequent problems such as false welding and weld seam cracking.

It will be understood from FIG. 1 to FIG. 3 that the first connection member 200 further includes a first bent portion 204 that is disposed at an angle to the first positioning portion 202 and the first transition portion 203, and a first wiring portion 205 that is disposed at an angle to the first bent portion 204. The first wiring portion 205 is spaced apart from the first transition portion 203. Such spaced disposition may be formed through sheet metal stamping, or may be formed through welding.

It will be understood from FIG. 4 to FIG. 6 that the second connection member 200 further includes a second bent portion 304 that is disposed at an angle to the second positioning portion 302 and the second transition portion 303, and a second wiring portion 305 that is disposed at an angle to the second bent portion 304. The second wiring portion 305 is spaced apart from the second transition portion 303. Such spaced disposition may be formed through sheet metal stamping, or may be formed through welding.

It will be understood from FIG. 8 that, after the first connection member 200 and the second connection member 300 are connected to the adapter member 400, the first wiring portion 205 and the second wiring portion 305 are parallel, and are respectively located on the two sides of the adapter member 400. The first wiring portion 205 is farther away from the adapter member 400 than the first transition portion 203, and the second wiring portion 305 is farther away from the adapter member 400 than the second transition portion 303. An advantage of such a structure lies in that, it is beneficial for connections between the two connection members and the peripheral harness, and connection points between the two connection members and the peripheral harness can be as far as possible, thereby reducing risks such as arcing and short-circuiting.

It will be understood from FIG. 1 that the first positioning hole 201 is the oblong hole, and the first positioning portion 202 has a first edge 206 that is parallel to a length direction of the first positioning hole 201 (that is, a dash-dot-line direction in FIG. 1).

It will be understood from FIG. 4 that the second positioning hole 301 is the oblong hole, and the second positioning portion 302 has a second edge 306 that is parallel to a length direction of the second positioning hole 301 (that is, a dash-dot-line direction in FIG. 4).

It will be understood from FIG. 12 that, after the first connection member 200 and the second connection member 300 are connected to the adapter member 400, there is a gap between the first edge 206 and the second edge 306. In such a structure, the two connection members are staggered but do not lap over each other. This helps observe synchronously whether the two connection members are detached and have fallen off from the adapter member 400 in a subsequent welding process.

To improve connection strength, after the first boss 401 is inserted into the first positioning hole 201 and the second boss 402 is inserted into the second positioning hole 301, the first connection member 200 and the adapter member 400 are connected through welding along an edge of the first boss 401 and the first positioning hole 201, and the second connection member 300 and the adapter member 400 are connected through welding along an edge of the second boss 402 and the second positioning hole 301.

A battery pack designed according to this application may be constructed as the battery pack 500 in some embodiments, or may be constructed as the battery pack 100 in some other embodiments.

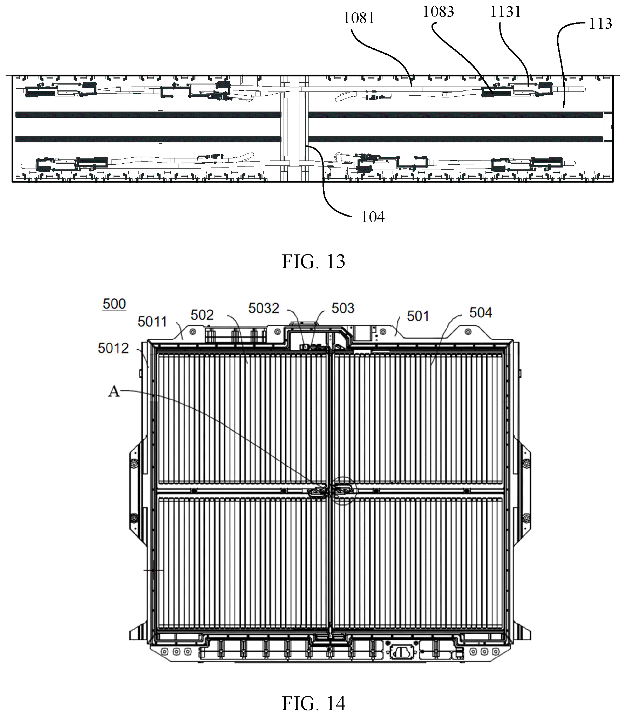

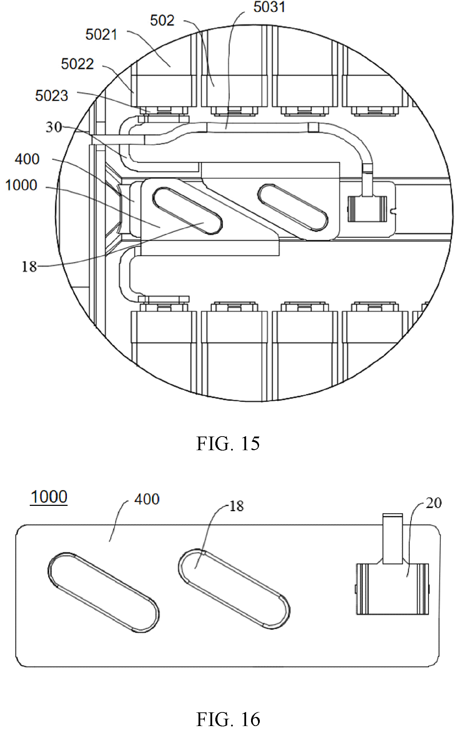

Herein, referring to FIG. 14 and FIG. 15, FIG. 14 is a schematic plan view of a structure of a battery pack 500 according to an embodiment of this application. FIG. 15 is a schematic plan view of a partial structure at a position A in FIG. 14.

As shown in FIG. 14 and FIG. 15, this application provides the battery pack 500. The battery pack 500 includes a tray 501, a cell 502, a sampling unit 503, and a connection assembly 1000. Herein, the tray 501 includes a bottom plate 5011 and a side wall 5012. The side wall 5012 is disposed around a peripheral edge of the bottom plate 5011, and cooperates with the bottom plate 5011 to form an accommodation space with a specific volume, so that the cell 502, the sampling unit 503, and the connection assembly 1000 are accommodated and protected. There are a plurality of cells 502, and the plurality of cells 502 are spaced apart on the bottom plate 5011. The cells 502 are connected in series or in parallel to each other. Each cell 502 includes an electrode core 5021, a housing 5022, and a terminal pole 5023. The housing 5022 is configured to: accommodate and protect the electrode core 5021. The terminal pole 5023 is located at an end of the electrode core 5021 and is connected to the electrode core 5021 through the housing 5022.

It will be understood that, when an external current is transmitted to the electrode core 5021 through the terminal pole 5023, the electrode core 5021 cooperates with an electrolyte (not shown in the figure), to store electric energy in the housing, thereby achieving a charging function of the cell 502. When an external circuit (not shown in the figure) controls the cell 502 to release electric energy, the terminal pole 5023 conducts energy stored in the housing in a form of current, thereby achieving a discharge function of the cell 502.

The connection assembly 1000 is fastened to the bottom plate 5011, and is electrically connected to the terminal pole 5023 of the cell 502, to collect an electrical signal of the cell 502. The sampling unit 503 includes a sampling harness 5031 and a receiver 5032. The receiver 5032 is located at an outer edge of the bottom plate 5011. The sampling harness 5031 is connected between the receiver 5032 and the connection assembly 1000, to transmit the electrical signal collected by the connection assembly 1000 to the receiver 5032. The receiver 5032 analyzes and stores the received electrical signal, and exchanges the received electrical signal with an external device, to monitor a status of each cell 502 in real time, thereby preventing undesirable phenomena such as overcharge, overdischarge, and an excessively high temperature from occurring in the cell 502.

It will be understood that, in some other embodiments, the battery pack 500 further includes a cover plate (not shown in the figure). The cover plate is disposed opposite to the bottom plate 5011, and cooperates with the side wall 5012 and the bottom plate 5011 to form an enclosed accommodation space.

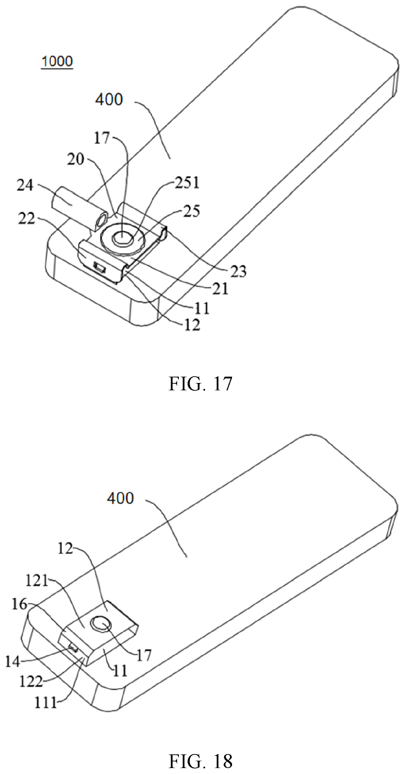

FIG. 16 is a schematic plan view of a structure of a connection assembly 1000 according to an embodiment of this application. FIG. 17 is a schematic plan view of a structure of a connection assembly 1000 according to another embodiment of this application.

The connection assembly 1000 according to this application is configured to be connected between a sampling harness 5031 and a cell 502, and includes: an electrical connection structure, where the electrical connection structure is constructed as the foregoing electrical connection structure, the adapter member 400 is configured to electrically connect to the cell 502, and a connection portion 11 is disposed on the adapter member 400; and an electrical connection member 20, configured to connect the connection portion 11 and the sampling harness 5031, where a holding portion is disposed at an end of the electrical connection member 20 that is connected to the connection portion 11, and the holding portion is configured to maintain a relative position between the electrical connection member 20 and the connection portion 11.

As shown in FIG. 14 to FIG. 17, in this application, the connection assembly 1000 includes the adapter member 400 and the electrical connection member 20. The adapter member 400 includes two opposite ends, one end is electrically connected to a terminal pole 5023 of the cell 502 (referring to FIG. 15), and the connection portion 11 is disposed on the other end. The electrical connection member 20 includes a connection piece 21 and the holding portion 22. There are two holding portions 22, and the two holding portions 22 are arranged on two opposite sides of the connection piece 21. The electrical connection member 20 is located at an end that is of the adapter member 400 and on which the connection portion 11 is disposed, and the holding portion 22 is configured to maintain the relative position between the electrical connection member 20 and the connection portion 11.

It will be understood that, in the connection assembly 1000 in this application, the connection portion 11 is disposed on the adapter member 400, and the holding portion 22 is correspondingly disposed on the electrical connection member 20 in a matched manner, so that the holding portion 22 and the connection portion 11 are fastened to each other. In this way, a relative position between the adapter member 400 and the electrical connection member 20 can be limited, to avoid displacement of the adapter member 400 relative to the electrical connection member 20, thereby facilitating a subsequent welding process between the adapter member 400 and the electrical connection member 20, and improving mounting efficiency.

It should be noted that a number and positions of holding portions 22 in the foregoing embodiment are merely described as examples. In other words, in another embodiment of this application, the number of holding portions 22 is not limited to two, and may be one, three, or another number. In addition, the holding portions 22 may be arranged on the two opposite sides of the connection piece 21, or may be disposed on any side of the connection piece 21. This is not particularly limited in this application.

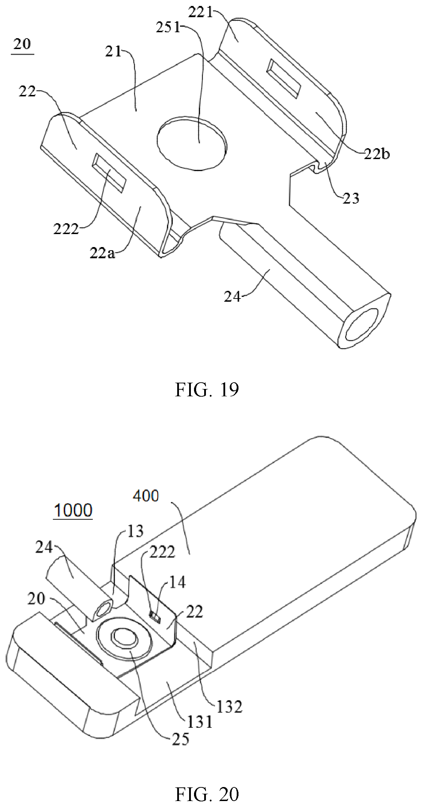

Referring to FIG. 18 and FIG. 19, FIG. 18 is a schematic plan view of a structure of an adapter member 400 according to an embodiment of this application. FIG. 19 is a schematic plan view of a structure of an electrical connection member 20 according to an embodiment of this application.

As shown in FIG. 14 to FIG. 19, in an embodiment, the holding portion 22 includes a first connection surface 221, and the connection portion 11 includes a second connection surface 111. The first connection surface 221 abuts against the second connection surface 111. It will be understood that the first connection surface 221 and the second connection surface 111 are provided in a matched manner, and the first connection surface 221 and the second connection surface 111 abut against each other, to maintain the relative position between the electrical connection member 20 and the connection portion 11, so that the electrical connection member 20 can be prevented from rotating relative to the adapter member 400 when being subsequently mounted to the adapter member 400. In addition, mounting processes of the adapter member 400 and the electrical connection member 20 can be further simplified, and mounting efficiency of the adapter member 400 and the electrical connection member 20 can be improved.

For example, the two holding portions 22 may be a first holding portion 22a and a second holding portion 22b respectively. When the electrical connection member 20 swings toward a side of the connection portion 11 that faces the first holding portion 22a, a first connection surface 221 of the first holding portion 22a abuts against a second connection surface 111 on a side of the connection portion 11, to prevent the electrical connection member 20 from swinging. Similarly, when the electrical connection member 20 swings toward a side of the connection portion 11 that faces the second holding portion 22b, a first connection surface 221 of the second holding portion 22b abuts against a second connection surface 111 on another side of the connection portion 11, to prevent the electrical connection member 20 from swinging. First connection surfaces 221 of the two holding portions 22 and second connection surfaces 111 of the connection portion 11 cooperate, so that the electrical connection member 20 can be prevented from rotating relative to the adapter member 400.

As shown in FIG. 17 to FIG. 19, in an embodiment, the connection portion 11 includes a protrusion 12, and the connection piece 21 of the electrical connection member 20 is attached to a top surface 121 of the protrusion 12. The holding portion 22 extends in a direction in which the connection piece 21 is close to the adapter member 400, and is fastened to an outer surface 122 of the protrusion 12, to fasten the electrical connection member 20 to the adapter member 400. Herein, the holding portion 22 may abut against the outer surface 122 of the protrusion 12 to implement fastening, and the holding portion 22 may alternatively be clamped to the outer surface 122 of the protrusion 12 to implement fastening. It should be noted that, in this case, the outer surface 122 of the protrusion 12 is also the second connection surface 111 of the connection portion 11, and a surface of the holding portion 22 that is close to the protrusion 12 is the first connection surface 221.

**In** an embodiment, the electrical connection member 20 includes a pre-bent section 23. The pre-bent section 23 is connected between a side wall of the connection piece 21 and the holding portion 22, and a cross section of the pre-bent section 23 is arcuate. It will be understood that, in this embodiment, the pre-bent section 23 is disposed at a joint between the side wall 5012 of the connection piece 21 and the holding portion 22 as a transition structure, and the cross section of the pre-bent section 23 is disposed as being arcuate, so that stress concentration can be reduced, and a risk of breakage at the joint between the side wall 5012 of the connection piece 21 and the holding portion 22 can be reduced.

The electrical connection member 20 further includes a wiring hole 24. The wiring hole 24 is located at an end of the electrical connection member 20 that is away from the adapter member 400, and is located on a side of the connection piece 21 that faces away from the adapter member 400. The wiring hole 24 is connected to the sampling harness 5031 to transmit a collected signal to a receiver 5032 (referring to FIG. 15).

**In** an embodiment, a shape of the protrusion 12 is square, and the holding portion 22 is attached to the side wall of the square protrusion 12 to be fastened to the protrusion 12.

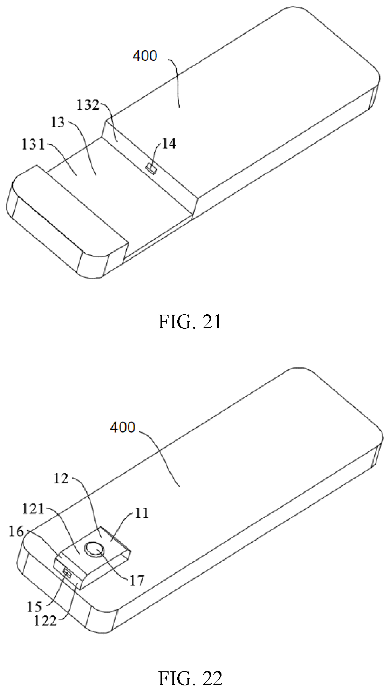

Referring to FIG. 20 and FIG. 21, herein, FIG. 20 is a schematic plan view of a structure of a connection assembly 1000 according to another embodiment of this application. FIG. 21 is a schematic plan view of a structure of an adapter member 400 according to another embodiment of this application.

As shown in FIG. 20 and FIG. 21, in an embodiment, a connection portion 11 includes a groove 13, and a connection piece 21 of an electrical connection member 20 is attached to a bottom surface 131 of the groove 13. A holding portion 22 extends in a direction in which the connection piece 21 faces away from the adapter member 400, and abuts against an inner surface 132 of the groove 13, to fasten the electrical connection member 20 to the adapter member 400. It should be noted that, in this case, the inner surface 132 of the groove 13 is also a second connection surface 111 of the connection portion 11, and a surface of the holding portion 22 that is close to the groove 13 is a first connection surface 221.

The electrical connection member 20 further includes a wiring hole 24. The wiring hole 24 is located at an end of the electrical connection member 20 that is away from the adapter member 400, and is located on a side of the connection piece 21 that faces away from the adapter member 400. The wiring hole 24 is connected to a sampling harness 5031 to transmit a collected signal to a receiver 5032 (referring to FIG. 15).

In an embodiment, a shape of the groove 13 is square, and the holding portion 22 is attached to an inner wall of the square groove 13 to be fastened to the groove 13.

In the embodiment shown in FIG. 17, the holding portion 22 is elastic. It will be understood that the holding portion 22 is disposed as being elastic, and a deformation recovery capability of the elastic holding portion 22 is used, to facilitate mounting of the adapter member 400 and the electrical connection member 20. In addition, it can be further ensured that the holding portion 22 reliably abuts against the connection portion 11.

In an embodiment, a minimum distance between the two holding portions 22 is less than a width dimension of the protrusion 12, and the two holding portions 22 clamp two sides of the protrusion 12 to fasten the electrical connection member 20. It will be understood that, in this embodiment, based on a case in which the adapter member 400 is provided with the protrusion 12, because the holding portion 22 is elastic, the minimum distance between the two holding portions 22 is set to be less than the width dimension of the protrusion 12, and the two holding portions 22 clamp the two sides of the protrusion 12, so that the holding portions 22 are automatically pressed to and cooperate with the outer surface 122 of the protrusion 12 by using an elastic deformation function of the holding portion 22, thereby fastening the electrical connection member 20.

In the embodiment shown in FIG. 20, a maximum distance between two holding portions 22 is greater than a width dimension of the groove 13, and the two holding portions 22 abut against the inner surface 132 of the groove 13 to fasten the electrical connection member 20. It will be understood that, in this embodiment, based on a case in which the adapter member 400 is provided with the groove 13, because the holding portion 22 is elastic, the maximum distance between the two holding portions 22 is set to be greater than the width dimension of the groove 13, and the two holding portions 22 abut against the inner surface 132 of the groove 13, so that the holding portions 22 are automatically pressed to and cooperate with the inner surface 132 of the groove 13 by using an elastic deformation function of the holding portion 22, thereby fastening the electrical connection member 20.

Referring to FIG. 17 to FIG. 19, in an embodiment, the adapter member 400 includes a bump 14. There are two bumps 14. The two bumps 14 are respectively provided on outer surfaces 122 on two opposite sides of the protrusion 12, and each bump 14 protrudes toward a corresponding holding portion 22. Each holding portion 22 includes one hollow region 222. Positions and a number of hollow regions 222 are disposed to match positions and a number of bumps 14, and each bump 14 extends into and abuts against one hollow region 222.

Referring to FIG. 19 and FIG. 20, in an embodiment, the adapter member 400 includes a bump 14. There are two bumps 14. The two bumps 14 are respectively provided on inner surfaces 132 on two opposite sides of the groove 13, and each bump 14 protrudes toward a corresponding holding portion 22. Each holding portion 22 includes one hollow region 222. Positions and a number of hollow regions 222 are disposed to match positions and a number of bumps 14, and each bump 14 extends into and abuts against one hollow region 222.

In the foregoing embodiments, the bump 14 is provided on the outer surface 122 of the protrusion 12 or the inner surface 132 of the groove 13, the hollow region 222 is provided, in a matched manner, at a position of the holding portion 22 that corresponds to the bump 14, and the bump 14 extends into and abuts against the hollow region 222, to prevent the electrical connection member 20 from moving toward a direction that is away from the adapter member 400, so that a relative position between the adapter member 400 and the connection piece can be further limited.

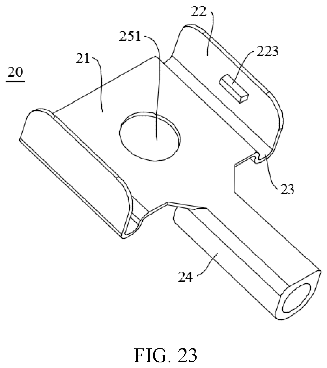

As shown in FIG. 22 and FIG. 23, in an embodiment, the adapter member 400 includes a clamping groove 15, and the clamping groove 15 is provided on the outer surfaces 122 on the two opposite sides of the protrusion 12. The holding portion 22 includes a boss 223. Positions and a number of bosses 223 are disposed to match positions and a number of clamping grooves 15. Each boss 223 is configured to: extend into and abut against one clamping groove 15. It will be understood that, in this embodiment, the outer surface 122 of the protrusion 12 is recessed in a direction that is away from the holding portion 22 to form the clamping groove 15. In addition, the boss 223 is provided, in a matched manner, at a position of the holding portion 22 that corresponds to the clamping groove 15, and the clamping groove 15 abuts against and cooperates with the boss 223, to prevent the electrical connection member 20 from moving toward a direction that is away from the adapter member 400, so that a relative position between the adapter member 400 and the connection piece can be further limited.

It should be noted that, in an embodiment in which the adapter member 400 is provided with the groove 13, the inner surface 132 of the groove 13 may be recessed in a direction that is away from the holding portion 22 to form the clamping groove 15, and the effect in the foregoing embodiment may also be achieved.

In an embodiment, when the adapter member 400 includes a bump 14, projections of hollow regions 222 of the two holding portions 22 on a surface of one of the holding portions 22 partially overlap or are spaced apart from each other. In another embodiment, when the adapter member 400 includes the clamping groove 15, projections of bosses 223 of the two holding portions 22 on a surface of one of the holding portions 22 partially overlap or are spaced apart from each other.

It will be understood that, in the foregoing embodiments, based on a case in which the adapter member 400 includes a bump 14 or the groove 13, the projections of the hollow regions 222 or the bosses 223 of the two holding portions 22 on the surface of one of the holding portions 22 are provided to partially overlap or be spaced apart from each other. In other words, the hollow regions 222 or the bosses 223 of the two holding portions 22 are provided in different shapes, or the hollow regions 222 or the bosses 223 of the two holding portions 22 are provided at different positions. In this way, the electrical connection member 20 can be mounted at a preset position in a preset posture, thereby avoiding reverse mounting of the electrical connection member 20.

As shown in FIG. 17, in an embodiment, the protrusion 12 is provided with a chamfer 16, and the chamfer 16 is provided on the top surface 121 of the protrusion 12. It will be understood that, in this embodiment, the chamfer 16 on the top surface 121 of the protrusion 12 may be configured to guide the holding portion 22 to extend toward the protrusion 12, so that the electrical connection member 20 is more easily assembled with the adapter member 400.

It should be noted that, in another embodiment, when the adapter member 400 is provided with the groove 13 to fasten the electrical connection member 20, the chamfer 16 may be provided at an opening of the groove 13, to guide the holding portion 22 to extend into the groove 13. In addition, this may also make an assembly process of the electrical connection member 20 and the adapter member 400 easier.

As shown in FIG. 16, in an embodiment, a positioning portion 25 is disposed on a surface of the connection piece 21 that is away from the adapter member 400. It will be understood that, in this embodiment, the positioning portion 25 is disposed on the surface of the electrical connection member 20 that is away from the connection piece 21, so that, when the electrical connection member 20 and the adapter member 400 are welded, a required welding position can be identified and accurately positioned by using the positioning portion 25.

In the embodiment shown in FIG. 16, the positioning portion 25 includes a positioning hole 251. A positioning post 17 is disposed on a surface on which the adapter member 400 is attached to the connection piece 21. A position and a shape of the positioning post 17 are disposed to match those of the positioning hole 251, and the positioning post 17 may extend into the positioning hole 251. It will be understood that, in this embodiment, the electrical connection member 20 is provided with the positioning hole 251, and the positioning post 17 is disposed on the surface on which the adapter member 400 is attached to the connection piece 21, so that the positioning post 17 can extend into the positioning hole 251 and abut against an inner surface of the positioning hole 251, to limit the relative position between the adapter member 400 and the electrical connection member 20.

In an embodiment, the shape of the positioning hole 251 is circular, and a shape of a corresponding positioning post 17 is cylindrical.

It should be noted that a structure of the positioning portion 25 is merely described as an example. In some other embodiments, the positioning portion 25 may be disposed on a surface of the electrical connection member 20 that faces away from the connection piece 21 in any other form, for example, may be a positioning point or another planar pattern, provided that an identification function can be achieved to facilitate positioning.

In an embodiment, the holding portion 22, the pre-bent section 23, and the connection piece 21 are of an integrated structure. It will be understood that the holding portion 22, the pre-bent section 23, and the connection piece 21 are disposed as the integral structure, that is, the holding portion 22, the pre-bent section 23, and the connection piece 21 may be directly formed by stamping a body of the electrical connection member 20, so that a manufacturing process of the electrical connection member 20 can be simplified, and reliability of the electrical connection member 20 can be further improved.

In an embodiment, the electrical connection member 20 is made of nickel. It will be understood that, in this embodiment, based on advantages such as good conductivity, good welding performance, and oxidation resistance of the nickel, the electrical connection member 20 is manufactured by using the nickel, so that reliability of the connection assembly 1000 in this application can be improved.

Referring to FIG. 15, in an embodiment, the connection assembly 1000 further includes an electrical connection portion 30. One end of the electrical connection portion 30 is fastened to the adapter member 400, and the other end of the electrical connection portion 30 is connected to the terminal pole 5023 of the cell 502, so that an electrical signal transmission function between the cell 502 and the adapter member 400 is achieved.

In some embodiments, the electrical connection portion 30 includes a first connection member 200 and a second connection member 300.

Referring to FIG. 16, in an embodiment, the adapter member 400 further includes a convex post 18. The convex post 18 is spaced apart from the connection portion 11, and one convex post 18 is cooperatively fastened to one electrical connection portion 30. It will be understood that, in this embodiment, the convex post 18 that is spaced apart from the connection portion 11 is provided on the adapter member 400, and one convex post 18 is cooperatively fastened to one electrical connection portion 30, to ensure that an electrical signal of the terminal pole 5023 of the cell 502 is transmitted to the convex post 18 through the electrical connection portion 30, so that an electrical signal transmission function between the terminal pole 5023 of the cell 502 and the adapter member 400 can be achieved.

In some embodiments, the convex post 18 includes a first boss 401 and a second boss 402.

Referring to FIG. 14 and FIG. 15, in an embodiment, a battery pack 500 includes four battery modules 504, and each battery module 504 includes a plurality of cells 502 that are connected in series or in parallel. In addition, two of the battery modules 504 are bridged through one connection assembly 1000 and sampled through the sampling harness 5031. It will be understood that two of the battery modules 504 are disposed to be bridged through one connection assembly 1000, so that a number of assemblies in the battery pack 500 can be reduced, thereby simplifying a structure of the battery pack 500. It should be noted that a number of battery modules 504 and a connection relationship between the battery module 504 and the connection assembly 1000 in the foregoing embodiments are merely described as examples.

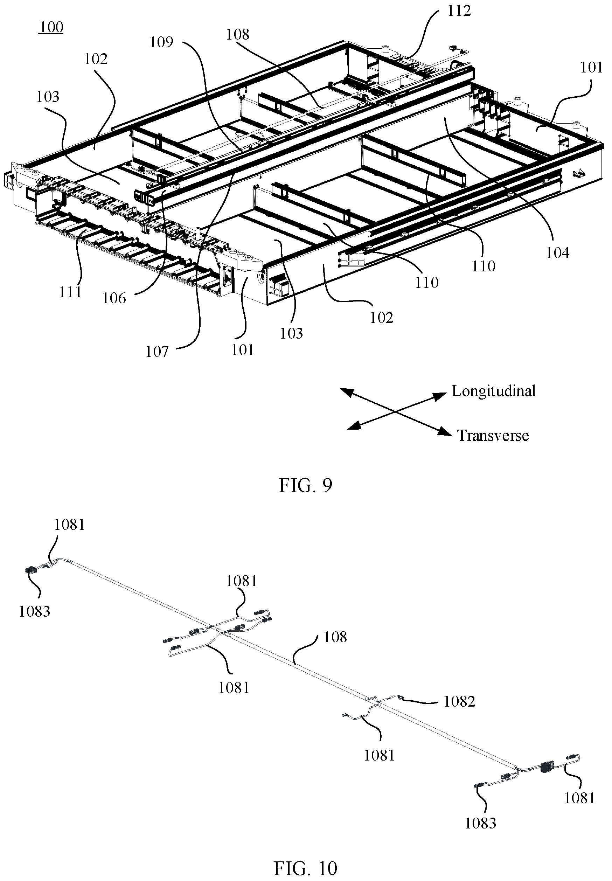

Referring to FIG. 9 to FIG. 13, the battery pack 100 includes the foregoing electrical connection structure. The battery pack 100 further includes at least two battery modules 113 and a battery harness. In the at least two battery modules 113, one battery module 113 is connected to the first connection member 200, the other battery module 113 is connected to the second connection member 300, and the battery harness is connected to the adapter member 400. In this way, a connection between the two battery modules 113 and a connection between the two battery modules 113 and the battery harness are implemented. To achieve these connection relationships, only three parts, namely, the first connection member 200, the second connection member 300, and the adapter member 400, are required. The number of parts is small, and the connection relationship is simple.

A battery tray has a tray longitudinal beam 104, the tray longitudinal beam 104 has an accommodation groove 105, and the battery harness is accommodated in the accommodation groove 105 and is electrically insulated from the tray longitudinal beam 104.

In FIG. 9, the battery tray includes a pair of transverse side beams 101 and a pair of longitudinal side beams 102, and the transverse side beams 101 and the longitudinal side beams 102 are connected to form a frame structure. In addition, this application can also use an integrated cast or integrated stamped battery tray structure. Because the battery harness is accommodated in the accommodation groove 105 of the tray longitudinal beam 104 and is electrically insulated from the tray longitudinal beam 104, most parts of the battery harness can be protected by the tray longitudinal beam 104, and when thermal runaway occurs in the battery module in a battery accommodation space 103, adverse impact on the battery harness is reduced. Although the accommodation groove 105 in this embodiment is formed on the tray longitudinal beam 104, the transverse side beam 101 and the longitudinal side beam 102 can also have the accommodation groove 105. Therefore, another beam member, for example, the tray longitudinal beam 104, the transverse side beam 101, and the longitudinal side beam 102, can be referred to as a structural beam, and the structural beam has the accommodation groove 105.

Alternatively, it will be understood from FIG. 9 that the battery harness includes a high-voltage harness and a low-voltage harness. The high-voltage harness includes a high-voltage busbar 106 and a high-voltage busbar groove 107. The high-voltage busbar 106 is made of a material, for example, copper or aluminum, and is used for high-voltage electrical connection to the battery module, for example, convergence of each battery module. The high-voltage busbar groove 107 is made of an insulating material, and the high-voltage busbar 106 is accommodated in the high-voltage busbar groove 107, and then the high-voltage busbar groove 107 is accommodated in the accommodation groove 105, to implement electrical insulation between the high-voltage busbar 106 and the tray longitudinal beam 104.

Referring to FIG. 10, alternatively, the low-voltage harness includes a sampling bus 108. The sampling bus 108 includes a plurality of sampling lines 1081, and the plurality of sampling lines 1081 are wrapped together by an insulation layer to form a sampling bus 108. The low-voltage harness can also include another signal line.

Referring to FIG. 11, the battery pack further includes a low-voltage harness groove 109. The low-voltage harness groove 109 is made of an insulating material, the sampling bus 108 is accommodated in the low-voltage harness groove 109, and the low-voltage harness groove 109 is accommodated in the accommodation groove 105, to implement electrical insulation between the sampling bus 108 or another low-voltage harness groove and the tray longitudinal beam 194.

It will be understood from FIG. 10 that the sampling bus 108 has a plurality of sampling connectors, and the sampling connector includes a sampling member 1082 and a quick-connect insertion member 1083. It will be understood from FIG. 11 that the low-voltage harness groove 109 has a plurality of openings 1091. The sampling connector includes the sampling member 1082 and the quick-connect insertion member 1083, and protrudes from the opening 1091, and then the opening 1091 is coated with a sealing adhesive for sealing.

Both the low-voltage harness groove 109 and the high-voltage busbar groove 107 can be formed through extrusion of a composite material, and are easily manufactured.

Alternatively, the tray longitudinal beam 104 is a U-shaped beam that is formed through extrusion, and the accommodation groove 105 is formed on the top of the tray longitudinal beam 104. This facilitates arrangement of the battery harness.

It will be understood from FIG. 9 that the battery tray further includes a tray transverse beam 110, and the tray longitudinal beam 104 intersects with the tray transverse beam 110, to divide the battery tray into a plurality of battery accommodation spaces 103. The tray longitudinal beam 104 and the tray transverse beam 103 can jointly improve structural strength of the battery tray.

It will be more easily understood from FIG. 12 that at least two battery modules 113 are mounted in the battery accommodation space 103, and the sampling member 1082 of the battery harness is welded or riveted to the adapter member 400. One battery module 113 is connected to the first connection member 200, and another battery module is connected to the second connection member 300. In this way, the battery module 113 can transmit a sampled signal to the sampling bus 108 through the adapter member 400, the first connection member 200, and the second connection member 300.

It will be more easily understood from FIG. 13 that the battery module 113 is mounted in the battery accommodation space 103, and the quick-connect insertion member 1083 of the sampling bus 108 is inserted into a sampling adapter harness plug 1131 of the battery module 113.

Referring to FIG. 9, a front power distribution box 111 is disposed on one transverse side beam 101, and a rear power distribution box 112 is disposed on another transverse side beam 101. The sampling connector includes the quick-connect insertion member 1083, and the quick-connect insertion member 1083 is inserted into a low-voltage plug (not shown) of the front power distribution box 111 or the rear power distribution box 112.

Alternatively, the accommodation groove 105 penetrates the tray longitudinal beam 104 in a longitudinal direction. In this way, the sampling bus 108 can be protected by the tray longitudinal beam 104 until the quick-connect insertion member 1083 of the sampling line 1081 extends into the front power distribution box 111 or the rear power distribution box 112.

Although in embodiments, the electrical connection structures shown in FIG. 1 to FIG. 8 are used in the battery pack 100, the electrical connection structure in this application can also be used in a connection between other electrical parts and components, for example, inverters or air conditioners, that need to be electrically connected.

An embodiment further provides a vehicle. The foregoing battery pack 100 is mounted in the vehicle, or the vehicle uses the foregoing electrical connection structure and the foregoing connection assembly 1000, to connect electrical parts that need to be connected.

In the descriptions of this specification, descriptions of the reference term "an embodiment", "some embodiments", "example embodiments", "an example", "a specific example", "some examples", or the like means specific features, structures, materials, or characteristics described with reference to the embodiment or example are included in at least one embodiment or example of this application. In this specification, the example expressions of the foregoing terms do not necessarily refer to a same embodiment or example. In addition, the described specific features, structures, materials, or characteristics may be combined in an appropriate manner in any one or more of embodiments or examples.

Although embodiments of this application have been shown and described, a person of ordinary skill in the art may understand that various changes, modifications, replacement, and variations may be made to these embodiments without departing from the principles and purposes of this application. The scope of this application is defined by the claims and their equivalents.

## Claims

1. An electrical connection structure, comprising:
a first connection member (200), wherein the first connection member (200) is provided with a first positioning hole (201);
a second connection member (300), wherein the second connection member (300) is provided with a second positioning hole (301); and
an adapter member (400), wherein the adapter member (400) is provided with a first boss (401) and a second boss (402), wherein
a shape of the first boss (401) corresponds to a shape of the first positioning hole (201), and a shape of the second boss (402) corresponds to a shape of the second positioning hole (301).

2. The electrical connection structure according to claim 1, wherein in a state in which the first connection member (200) and the second connection member (300) are connected to the adapter member (400), the first connection member (200) and the second connection member (300) do not overlap in a Z direction.

3. The electrical connection structure according to claim 1, wherein the first connection member (200) comprises a first positioning portion (202), the first positioning portion (202) is provided with the first positioning hole (201), the first positioning hole (201) is an oblong hole, and the first boss (401) is an oblong boss; and
the second connection member (300) comprises a second positioning portion (302), the second positioning portion (302) is provided with the second positioning hole (301), the second positioning hole (301) is an oblong hole, and the second boss (402) is an oblong boss.

4. The electrical connection structure according to claim 3, wherein a long axis of the first boss (401) is disposed at an angle to a long axis of the adapter member (400); and
a long axis of the second boss (402) is disposed at an angle to the long axis of the adapter member (400).

5. The electrical connection structure according to claim 3, wherein in a state in which the first connection member (200) and the second connection member (300) are connected to the adapter member (400), a sum of areas of the first positioning portion (202) and the second positioning portion (302) is less than an area of the adapter member (400).

6. The electrical connection structure according to claim 3, wherein the first connection member (200) further comprises a first transition portion (203), and the first transition portion (203) is disposed at an angle to the first positioning portion (202); and
the second connection member (300) further comprises a second transition portion (303), and the second transition portion (303) is disposed at an angle to the second positioning portion (302).

7. The electrical connection structure according to claim 6, wherein in a state in which the first connection member (200) and the second connection member (300) are connected to the adapter member (400), the first transition portion (203) and the second transition portion (303) are respectively located on two sides of the adapter member (400).

8. The electrical connection structure according to claim 6, wherein the first connection member (200) further comprises a first wiring portion (205), and the first wiring portion (205) is spaced apart from the first transition portion (203); and
the second connection member (300) further comprises a second wiring portion (305), and the second wiring portion (305) is spaced apart from the second transition portion (303).

9. The electrical connection structure according to claim 8, wherein in a state in which the first connection member (200) and the second connection member (300) are connected to the adapter member (400), the first wiring portion (205) is farther away from the adapter member (400) than the first transition portion (203), and the second wiring portion (305) is farther away from the adapter member (400) than the second transition portion (303).

10. The electrical connection structure according to claim 3, wherein the first positioning portion (202) has a first edge (206) parallel to a length direction of the first positioning hole (201), the second positioning portion (302) has a second edge (206) parallel to a length direction of the second positioning hole (301), and in a state in which the first connection member (200) and the second connection member (300) are connected to the adapter member (400), there is a gap between the first edge (206) and the second edge (206).

11. A connection assembly (1000), configured to be connected between a sampling harness (5031) and a cell (502), wherein the connection assembly (1000) comprises:
an electrical connection structure, wherein the electrical connection structure is constructed as the electrical connection structure according to any one of claims 1 to 10, the adapter member (400) is configured to electrically connect to the cell (502), and a connection portion (11) is disposed on the adapter member (400); and
an electrical connection member (20), configured to connect to the connection portion (11) and the sampling harness (5031), wherein a holding portion is disposed at an end of the electrical connection member (20) that is connected to the connection portion (11), and the holding portion is configured to maintain a relative position between the electrical connection member (20) and the connection portion (11).

12. The connection assembly (1000) according to claim 11, wherein the electrical connection member (20) comprises two holding portions (22) and a connection piece (21) that is connected between the two holding portions (22), and the two holding portions (22) are separately connected to the connection portion (11).

13. The connection assembly (1000) according to claim 12, wherein the holding portion (22) comprises a first connection surface (221), the connection portion (11) comprises a second connection surface (111), and the first connection surface (221) abuts against the second connection surface (111).

14. The connection assembly (1000) according to claim 13, wherein the connection portion (11) comprises a protrusion (12), and the two holding portions (22) are located on two sides of the protrusion (12) to fasten the electrical connection member (20); or
the connection portion (11) comprises a groove (13), and the two holding portions (22) separately abut against an inner surface (132) of the groove (13) to fasten the electrical connection member (20).

15. The connection assembly (1000) according to claim 14, wherein the holding portion (22) is elastic.

16. The connection assembly (1000) according to claim 15, wherein the electrical connection member (20) comprises a pre-bent section (23), and the pre-bent section (23) is connected between the connection piece (21) and the holding portion (22).

17. The connection assembly (1000) according to claim 16, wherein the connection portion (11) comprises the protrusion (12), and a minimum distance between the two holding portions (22) is less than a width dimension of the protrusion (12); or the connection portion (11) comprises the groove (13), and a maximum distance between the two holding portions (22) is greater than a width dimension of the groove (13).

18. The connection assembly (1000) according to claim 14, wherein the adapter member (400) comprises a bump (14), the bump (14) is provided on an outer surface (122) of the protrusion (12) or the inner surface (132) of the groove (13), and the bump (14) protrudes toward the holding portion (22); and
the holding portion (22) comprises a hollow region (222), a position of the hollow region (222) is correspondingly disposed to match a position of the bump (14), and the bump (14) is configured to: extend into and abut against the hollow region (222), to limit a relative position between the adapter member (400) and the electrical connection member (20).

19. The connection assembly (1000) according to claim 18, wherein projections of hollow regions (222) of the two holding portions (22) on a surface of one of the holding portions (22) partially overlap or are spaced apart from each other.

20. The connection assembly (1000) according to claim 14, wherein the adapter member (400) comprises a clamping groove (15), the clamping groove (15) is provided on an outer surface (122) of the protrusion (12) or the inner surface (132) of the groove (13), and the clamping groove (15) is recessed toward the protrusion (12) or the inner surface (132) of the groove (13); and
the holding portion (22) comprises a boss (223), a position of the boss (223) is correspondingly disposed to match a position of the clamping groove (15), and the boss (223) is configured to: extend into and abut against the clamping groove (15), to limit a relative position between the adapter member (400) and the electrical connection member (20).

21. The connection assembly (1000) according to claim 20, wherein projections of the bosses (223) of the two holding portions (22) on a surface of one of the holding portions (22) partially overlap or are spaced apart from each other.

22. The connection assembly (1000) according to any one of claims 14 to 21, wherein a chamfer (16) is disposed on the protrusion (12) or the groove (13), the chamfer (16) is disposed on a top surface (121) of the protrusion (12) or an opening of the groove (13), and the chamfer (16) is configured to guide the holding portion (22) to extend into the protrusion (12) or the groove (13).

23. The connection assembly (1000) according to claim 22, wherein a shape of the protrusion (12) is square, and the holding portion (22) is attached to a side wall (5012) of the square protrusion (12) to be fastened to the protrusion (12); or
a shape of the groove (13) is square, and the holding portion (22) is attached to an inner wall of the square groove (13) to be fastened to the groove (13).

24. The connection assembly (1000) according to any one of claims 12 to 21, wherein a positioning portion (25) is disposed on a surface of the connection piece (21) that faces away from the adapter member (400), and the positioning portion (25) is configured to achieve a positioning function when the electrical connection member (20) and the adapter member (400) are welded.

25. The connection assembly (1000) according to claim 24, wherein the positioning portion (25) comprises a positioning hole (251), a positioning post (17) is disposed on a surface of the adapter member (400) that is attached to the connection piece (21), a position and a shape of the positioning post (17) are disposed to match those of the positioning hole (251), and the positioning post (17) is configured to extend into the positioning hole (251), to limit the relative position between the adapter member (400) and the electrical connection member (20).

26. The connection assembly (1000) according to claim 25, wherein the shape of the positioning hole (251) is circular, and a shape of the corresponding positioning post (17) is cylindrical.

27. The connection assembly (1000) according to any one of claims 12 to 21, wherein the connection assembly (1000) further comprises an electrical connection portion (30), and the electrical connection portion (30) is fastened to the adapter member (400), and is configured to electrically connect to the cell (502).

28. The connection assembly (1000) according to claim 27, wherein the adapter member (400) further comprises a convex post (18), the convex post (18) is spaced apart from the connection portion (11), and one convex post (18) is cooperatively fastened to one electrical connection portion (30).

29. A battery pack, comprising:
the electrical connection structure according to any one of claims 1 to 10 or the connection assembly (1000) according to any one of claims 11 to 28.

30. The battery pack according to claim 29, further comprising:
at least two battery modules (113); and
a battery harness, wherein
in the at least two battery modules (113), one battery module (113) is connected to the first connection member (200), the other battery module (113) is connected to the second connection member (300), and the battery harness is connected to the adapter member (400).

31. The battery pack according to claim 30, wherein the battery pack further comprises:
a battery tray, wherein the battery tray has a structural beam, the structural beam has an accommodation groove (105), and the battery harness is accommodated in the accommodation groove (105) and is insulated from the structural beam.

32. The battery pack according to claim 31, wherein the battery harness comprises a sampling bus, the sampling bus has a sampling member (1082), and the sampling member (1082) is connected to the adapter member (400).

33. The battery pack according to claim 32, further comprising a low-voltage harness groove (109), wherein the sampling bus is accommodated in the low-voltage harness groove (109), and the low-voltage harness groove (109) is accommodated in the accommodation groove (105).

34. The battery pack according to claim 29, further comprising:
a cell (502) and a sampling harness (5031), wherein
the connection assembly (1000) is connected between the sampling harness (5031) and the cell (502).

35. The battery pack according to claim 34, wherein the battery pack comprises at least two battery modules (504), each battery module (504) comprises a plurality of cells (502) that are connected in series or in parallel, and two of the battery modules (504) are bridged through the connection assembly (1000) and sampled through the sampling harness (5031).

36. A vehicle, wherein the vehicle uses the electrical connection structure according to any one of claims 1 to 10 or the connection assembly (1000) according to any one of claims 11 to 28, or the battery pack according to any one of claims 29 to 35 is mounted in the vehicle.
